(19) Europäisches Patentamt
European Patent Office
Office européen des brevets

(11) **EP 4 464 575 A1**

(12) **EUROPEAN PATENT APPLICATION**

(43) Date of publication:
**20.11.2024 Bulletin 2024/47**

(21) Application number: **24160036.0**

(22) Date of filing: **27.02.2024**

(51) International Patent Classification (IPC):
***B62D 5/04*** *(2006.01)*     ***B60W 30/10*** *(2006.01)*
***B62D 1/28*** *(2006.01)*     ***B62D 15/02*** *(2006.01)*

(52) Cooperative Patent Classification (CPC):
**B62D 5/0463; B60W 30/10; B62D 1/286;
B62D 15/025**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **14.04.2023 JP 2023066359**

(71) Applicant: **Suzuki Motor Corporation
Shizuoka 432-8611 (JP)**

(72) Inventor: **TANAKA, Kenji
HAMAMATSU-SHI, 432-8611 (JP)**

(74) Representative: **Plasseraud IP
104 Rue de Richelieu
CS92104
75080 Paris Cedex 02 (FR)**

(54) **VEHICULAR DRIVING SUPPORT APPARATUS**

(57) A vehicular driving support apparatus 1 sets steering assistance amount which is assistance amount of steering torque for suppressing sway of the vehicle when the sway is detected. A driver's intervention degree in steering is detected (a driver's intervention detection unit 112), and the steering assistance amount is adjusted based on the intervention degree (a gain adjustment unit 113). Steering of the vehicle is performed by using total torque of driver added torque which is steering torque added by the driver and the adjusted steering assistance amount.

EP 4 464 575 A1

**Description**

**BACKGROUND OF THE INVENTION**

**Field of the Invention**

The present invention relates to a vehicular driving support apparatus (i.e., driving support apparatus for a vehicle).

**Description of the Related Art**

In a known vehicular technique, a target steering angle of the wheels for driving the vehicle along a target trajectory is calculated, and the actual steering angle is controlled to match this target steering angle.
[Patent Document 1] JP 2013-132923 A
When a vehicle sways leftward or rightward from the target position in the lane, for example, from the center of the lane, the driver may have a preference for the steering feeling when returning the vehicle to the center of the lane. Specifically, depending on the drivers, some drivers may prefer to return the vehicle to the center of the lane as quickly as possible after occurrence of sway, whereas some drivers may prefer to maintain smooth driving while suppressing the width of the sway (i.e., suppressing the maximum deviation from the center of the lane). Furthermore, even for the same driver, the driver wants to return the vehicle to the center of the lane as quickly as possible in some cases, whereas the driver wants to maintain smooth driving while allowing a certain degree of sway in some cases.

**SUMMARY OF THE INVENTION**

In view of the above-described circumstances, an object of the present invention is to provide a vehicular driving support apparatus that can achieve a steering feeling in accordance with the driver's preferences.
In one aspect of the present invention, a vehicular driving support apparatus includes: a sway detection unit configured to detect sway of a vehicle in a driving lane; a steering-assistance-amount setting unit configured to set steering assistance amount which is assistance amount of steering torque for suppressing the sway when the sway of the vehicle is detected by the sway detection unit; a driver's intervention detection unit configured to detect driver's intervention degree in steering; a steering-assistance-amount adjustment unit configured to adjust the steering assistance amount based on the intervention degree detected by the driver's intervention detection unit; and a steering execution unit configured to steer the vehicle by using total torque of driver added torque which is steering torque added by the driver and the steering assistance amount adjusted by the steering-assistance-amount adjustment unit.
The driver's intervention detection unit may detect, as the intervention degree, sway amount that indicates tendency of the sway when the driver intervenes in steering by adding steering torque.
The driver's intervention detection unit may detect the sway amount based on lateral deflection of a position of the vehicle with respect to a target position in a driving lane in a span from a time when the vehicle deviates leftward or rightward from the target position until a time when the vehicle returns to the target position through reverse turn of steering.
The steering-assistance-amount adjustment unit is preferably configured to increase the steering assistance amount more as the sway amount is larger.
The driver's intervention detection unit may detect, as the intervention degree, an override frequency that is a frequency of intervention in steering by the driver adding steering torque.
The driver's intervention detection unit may detect the override frequency based on number of times that steering intervention occurs per predetermined time.
The steering-assistance-amount adjustment unit is preferably configured to increase the steering assistance amount more as the override frequency is lower.
The driver's intervention detection unit may detect, as the intervention degree, the driver added torque when the intervention in steering occurs.
The steering-assistance-amount adjustment unit is preferably configured to increase the steering assistance amount more as the driver added torque is smaller.
The steering-assistance-amount setting unit may detect lateral deflection of a position of the vehicle with respect to a target position in a driving lane, and set the steering assistance amount by multiplying the lateral deflection or a state quantity equivalent to the lateral deflection by a predetermined gain. In this case, the steering-assistance-amount adjustment unit may adjust the gain depending on the intervention degree to adjust the steering assistance amount.
The driver's intervention detection unit may detect both of sway amount and an override frequency as the intervention degree. The sway amount indicates tendency of the sway when the driver intervenes in steering by adding steering torque, and the override frequency is a frequency of driver's intervention in steering. In this case, the steering-assistance-amount adjustment unit may set the gain based on a predetermined gain curve. The gain curve may include a first curve that defines the gain in a case of a large sway amount in relation to the override frequency, and a second curve that defines the gain in a case of a small sway amount in relation to the override frequency. The gain defined by the first curve in a region where the override frequency is high may be smaller than the gain defined by the second curve in a region where the override frequency is low.

The steering-assistance-amount setting unit may switch an operation mode depending on driver's selection among: a first mode in which a relatively large first gain is set as the gain irrespective of the steering-assistance-amount adjustment unit or update speed for increasing the gain is increased more as the intervention degree is smaller; a second mode in which a second gain smaller than in the first mode is set as the gain irrespective of the steering-assistance-amount adjustment unit or update speed for decreasing the gain is increased more as the intervention degree is larger; and a third mode in which the gain is set in advance. In such configuration, when the third mode is selected, the vehicular driving support apparatus may further include a steering-assistance-amount changing prohibition unit configured to prohibit the steering assistance amount from being changed by the steering-assistance-amount adjustment unit.

## EFFECTS OF THE INVENTION

According to one aspect of the present invention, driver's intervention degree in steering is detected, and steering assistance amount is adjusted depending on the driver's intervention degree. Accordingly, the adjusted steering assistance amount corresponds to the driver's intervention degree in steering, and thus, steering can be performed with the steering assistance amount that reflects the driver's intervention degree. As a result, a steering feeling in accordance with the driver's preferences can be provided.

## BRIEF DESCRIPTION OF THE DRAWINGS

In the accompanying drawings:

Fig. 1 is a schematic diagram illustrating an overall configuration of a vehicular driving support apparatus according to one embodiment of the present invention;
Fig. 2 is a schematic diagram illustrating the internal structure of the driving support apparatus;
Fig. 3 is a flowchart illustrating the basic flow of lane keeping control to be executed by the driving support apparatus;
Fig. 4 is a flowchart illustrating details of target-steering-angle setting processing in the lane keeping control;
Fig. 5 is a flowchart illustrating details of feedback-gain setting processing in the lane keeping control;
Fig. 6 is a map illustrating a trend of change in a feedback gain Gf with respect to sway amount Cd and an override frequency Fo;
Fig. 7 is a schematic diagram illustrating relationship between a target position (e.g., lane center) and the own vehicle in a driving lane;
Fig. 8 is a schematic diagram illustrating a trajectory of the vehicle depending on driver's intervention degree in steering; and
Fig. 9A and Fig. 9B are schematic diagrams illustrating a trajectory of the vehicle at the time of passing through a curved road.

## DETAILED DESCRIPTION

Hereinbelow, embodiments of the present invention will be described by referring to the accompanying drawings.

(Configuration of Driving Support Apparatus)

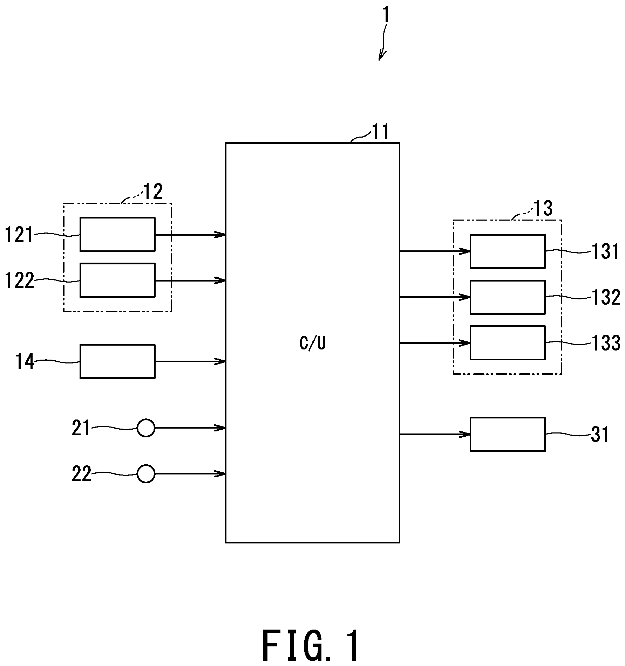

Fig. 1 is a schematic diagram illustrating an overall configuration of a vehicular driving support apparatus 1 according to one embodiment of the present invention.
The vehicular driving support apparatus 1 includes a controller 11, an external sensor 12, an instrument panel 13, and various sensors and meters as the main components related to the present embodiment. As other related components, the driving support apparatus 1 includes a direction indicator 14 and a steering actuator 31. The steering actuator 31 is a power source for an electric power steering system. The steering actuator 31 is provided on a path that transmits steering torque from a rudder (i.e., steering wheel) provided in the driver's seat to a steering shaft (i.e., driving shaft for steering), and generates assistance torque that assists the driver in operating the steering wheel. The steering actuator 31 can be realized by an electric motor, for example.
The controller 11 constitutes a calculation unit of the driving support apparatus 1, and generates and outputs a command signal that reflects the calculation result.

The external sensor 12 constitutes a detection unit of the driving support apparatus 1 in combination with a steering torque sensor 21 described below, monitors the surroundings of the own vehicle, and acquires information on the surrounding environment or situation. The external sensor 12 includes an external front monitoring camera 121 (hereinafter referred to as "the front camera 121") and a front millimeter-wave radar 122 as sensors for forward monitoring.

The field of view of the front camera 121 is set to the front of the own vehicle. The front camera 121 analyzes the generated images to detect pedestrians and obstacles in front of the own vehicle and further detect the status or situation of the road and lane (hereinafter referred to as "the driving lane") on which the own vehicle is traveling. Detection targets of the front camera 121 include road markings as well as marking lines such as a centerline of the road (hereinafter abbreviated as the centerline) and a lane edge of the road (hereinafter abbreviated as the lane edge). The centerline is displayed as a white dotted line at the center of the road, for example. The lane edge is displayed as a white line at the outer edge of the road and indicates the boundary between the roadway and the road shoulder, for example. In the present embodiment, "obstacles" to be detected by the front camera 121 include fixed obstacles installed on the road surface as well as other vehicles traveling in the same lane ahead of the own vehicle, i.e., preceding vehicles.

Based on the respective positions of the centerline and the lane edge, the front camera 121 detects the center position of the driving lane (hereinafter referred to as "the lane center") and also detects lateral deviation width of the vehicle position with respect to the lane center (hereinafter referred to as "the lateral deflection").

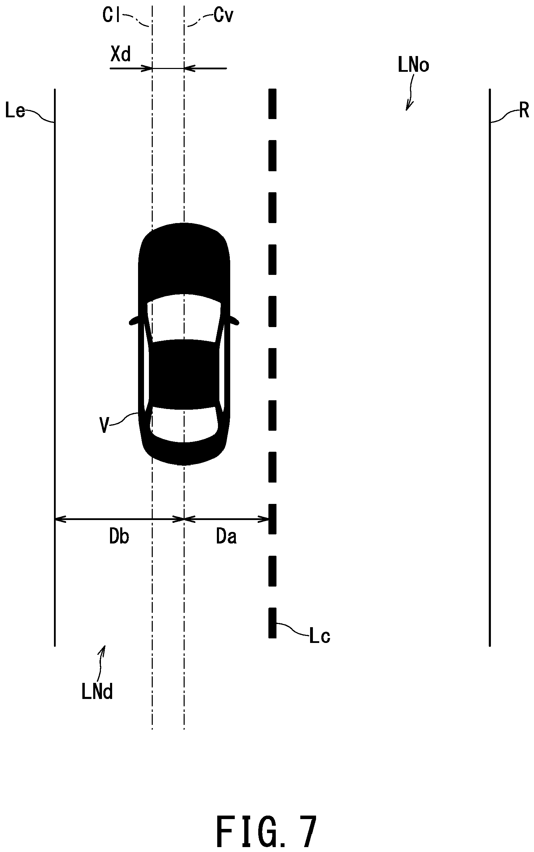

Fig. 7 is a schematic diagram illustrating relationship between the vehicle V and the target position (i.e., the lane center Cl in the case of the present embodiment) of the vehicle V in a driving lane LNd. The Vehicle V runs on the left lane LNd of the road R.

It is assumed that: one lane is provided on each of the left and right sides of the road R across the centerline Lc with respect to the traveling direction of the vehicle V; the left lane is the driving lane LNd; and the right lane is an opposite lane LNo. The lane center Cl is defined as an intermediate position between the centerline Lc and the lane edge Le. In the case of Fig. 7, the vehicle V sways rightward with respect to the lane center Cl.

The lateral deflection Xd can be detected as the deviation width of the lateral center Cv of the vehicle V (hereinafter referred to as "the vehicle center Cv") from the lane center Cl, through calculation based on the distance Da from the vehicle center Cv to the right-side marking line (i.e., centerline Lc) and the distance Db from the vehicle center Cv to the left-side marking line (i.e., lane edge Le).

The front millimeter-wave radar 122 emits radio waves of millimeter wavelength toward the front of the own vehicle and receives radio waves reflected by obstacles and/or other objects to determine vehicle parameters, such as the distance from the own vehicle to the obstacle and the relative speed of the own vehicle with respect to the obstacle, for example.

The detection signal of the external sensor 12 is inputted to the controller 11.

The instrument panel 13 displays an indicator for making the driver aware of the situation and alerting the driver as well as an indicator for requesting the driver to respond to the situation. The instrument panel 13 includes various lights such as an indicator light 131, a warning light 132, and an alarm 133 in addition to various meters configured to display the traveling state of the vehicle, such as the vehicle speed. The indicator light 131 displays the operating status of various control functions such as traction control and vehicle stability control, and also displays the operating status of each of various devices such as an immobilizer. The warning light 132 displays various warnings to the driver, such as low fuel level and non-use of the seatbelt. The warning light 132, the meters, and the indicator light 131 are installed at positions where the driver can see them during driving, such as the dashboard of the driver's seat. The alarm 133 works in conjunction with the warning light 132 and provides audible information to help the driver recognize the warning.

In addition to the above-described components, a steering torque sensor 21 and a steering angle sensor 22 are provided as other sensors related to the operation of the driving support apparatus 1. The steering torque sensor 21 detects the torque Tstr applied to the steering wheel by the driver (hereinafter referred to as "the driver added torque Tstr"). The steering angle sensor 22 detects the angle $\theta$ at which the wheels to be steered by the steering wheel are directed (i.e., the wheel direction angle $\theta$, hereinafter referred to as "the steering angle $\theta$"). In general, the wheels to be steered by the steering wheel are the front wheels. The steering angle $\theta$ is an angle formed between the vertical plane orthogonal to the rotation shaft of each front wheel and the vertical plane extending in the front-rear direction of the vehicle V.

The respective detection signals of the steering torque sensor 21 and the steering angle sensor 22 are also inputted to the controller 11 similarly to the external sensor 12.

(Configuration of Controller)

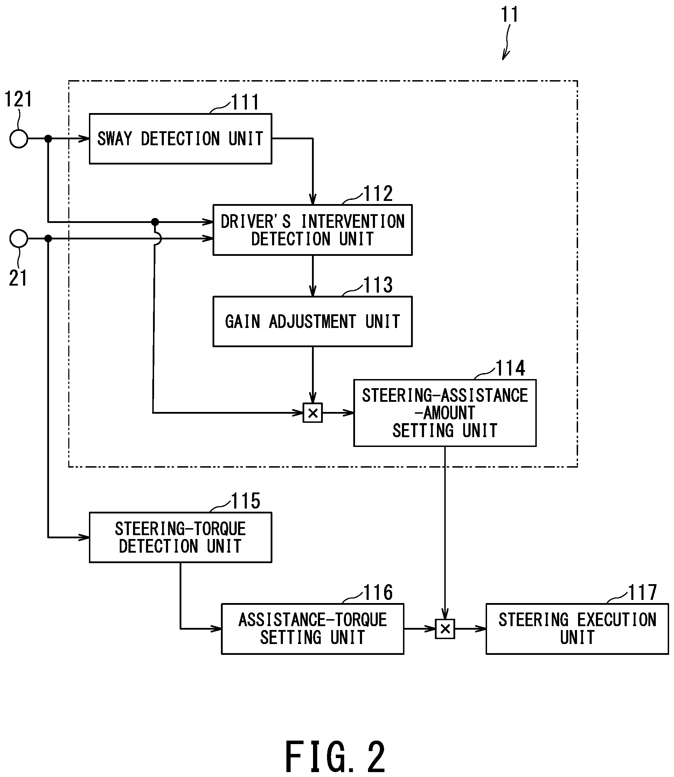

Fig. 2 is a schematic diagram illustrating the internal structure of the driving support apparatus 1.

In Fig. 2, of the controller 11, the components related to the lane keeping control are indicated inside the two-dot chain line frame.

In the present embodiment, the controller 11 sets the lane center Cl as the target position of the vehicle V in the driving lane LNd, and performs control of facilitating the vehicle V to keep running on the driving lane LNd by causing the vehicle V to run so as to track the lane center Cl (hereinafter referred to as "the lane keeping control"). When the vehicle V sways with respect to the lane center Cl, this sway is detected and the steering assistance amount AST for suppressing this sway is set. Further, driver's intervention degree Qi in steering is detected, and the steering assistance amount AST is adjusted depending on the driver's intervention degree Qi.

The sway detection unit 111 detects sway of the vehicle V in the driving lane LNd based on the output information from the front camera 121. In the present embodiment, the detection of sway is based on the lateral deflection Xd detected by the front camera 121. Specifically, sway is detected by determining whether the lateral deflection Xd is larger than 0 or deviates from a predetermined range based on 0.

The driver's intervention detection unit 112 detects the driver's intervention degree Qi in steering based on the output information from the front camera 121 and the steering torque sensor 21. Specifically, it is determined whether the driver added torque Tstr detected by the steering torque sensor 21 has transitioned from outside to inside the range indicative of substantial rightward or leftward steering operation by the driver or not. If such a transition occurs in the driver added torque Tstr, it is determined that the driver has intervened in steering, and the degree Qi of this intervention (hereinafter referred to as "the intervention degree Qi") is detected.

In the present embodiment, the determination as to whether the driver has intervened in steering or not is performed by determining whether the magnitude of the driver added torque Tstr exceeds a threshold defining the boundary of the above-described range in the increasing direction or not.

The detection of the intervention degree Qi is based on evaluation of sway amount Cd and an override frequency Fo. The "sway amount Cd" is an index indicative of the tendency of sway of the vehicle V when the driver intervenes in steering. The "override frequency Fo" is an index indicative of the frequency at which the driver intervenes in steering.

Within a predetermined period of time or within a predetermined travel distance, each time the vehicle V sways leftward or rightward with respect to the lane center Cl, the configuration of the present embodiment detects the maximum value Xd_max of the lateral deflection Xd in the span from the beginning time of the leftward or rightward sway of the vehicle V until the timing of returning to the lane center Cl through turning the steering wheel in reverse. The average value of the maximum values Xd_max is calculated, and this average value is detected as the sway amount Cd. The driver's intervention degree Qi can be evaluated to be smaller as the sway amount Cd is larger, and can be evaluated to be larger as the sway amount Cd is smaller.

The number of intervention times Ni that the driver has intervened in steering per unit time is repeatedly detected over a predetermined period of time or over a predetermined travel distance, the average value of the number of intervention times Ni is calculated, and this average value is detected as the override frequency Fo. The driver's intervention degree Qi can be evaluated to be smaller as the override frequency Fo is lower, and can be evaluated to be larger as the override frequency Fo is higher.

A gain adjustment unit 113 adjusts a feedback gain Gf that is used to set the steering assistance amount AST. In the present embodiment, setting of the steering assistance amount AST is performed by: (i) calculating the operation amount θc of the steering angle θ required to eliminate the sway with the lateral deflection Xd and return the vehicle V to the lane center Cl (hereinafter referred to as "the correction steering angle θc") on the basis of the lateral deflection Xd of the vehicle V; and (ii) multiplying this correction steering angle θc by the feedback gain Gf to convert it into a torque equivalent value. The gain adjustment unit 113 adjusts this feedback gain Gf depending on the driver's intervention degree Qi detected by the driver's intervention detection unit 112. The feedback gain Gf is adjusted by the method described below.

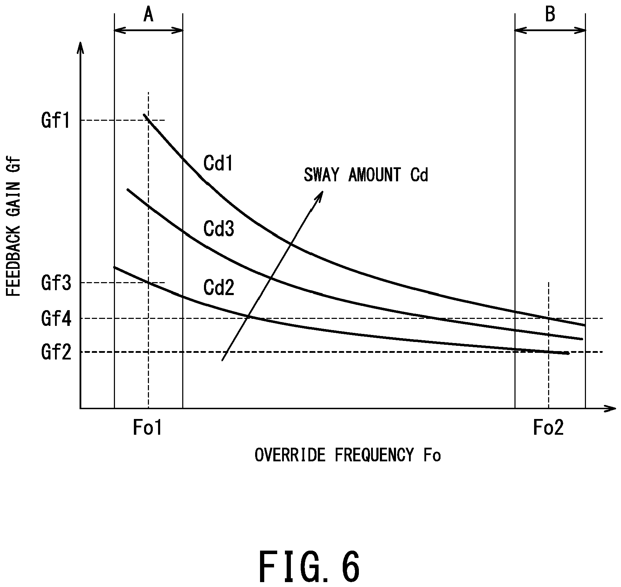

Fig. 6 is a map illustrating a trend of change in the feedback gain Gf with respect to the sway amount Cd and the override frequency Fo. As shown in the Fig. 6, the feedback gain Gf is increased more as the driver's intervention degree Qi in steering is smaller, specifically, as the sway amount Cd is larger or the override frequency Fo is lower. Conversely, the feedback gain Gf is decreased more as the driver's intervention degree Qi in steering is larger, specifically, as the sway amount Cd is smaller or the override frequency Fo is higher.

A steering-assistance-amount setting unit 114 multiplies the correction steering angle θc, which is a state quantity equivalent to the lateral deflection Xd, by the adjusted feedback gain Gf, and sets the resultantly acquired torque equivalent value to the steering assistance amount AST.

A steering-torque detection unit 115 detects the driver added torque Tstr based on the output information from the steering torque sensor 21.

An assistance-torque setting unit 116 sets assistance torque Tast depending on the driver added torque Tstr. This assistance torque Tast is set for the purpose of assisting the driver in steering operation. The larger the driver added torque Tstr is, the more the assistance torque Tast is increased.

A steering execution unit 117 adds the assistance torque Tast to the steering assistance amount AST, and applies the resultantly acquired total torque Tttl to the steering shaft to steer the vehicle V toward the lane center Cl. Specifically, the total torque Tttl is converted into a current command value Im (hereinafter referred to as "the motor-current command value Im") for the electric motor that is the steering actuator 31, and the motor-current command value Im is inputted to a controller of the electric motor.

(Contents of Lane Keeping Control)

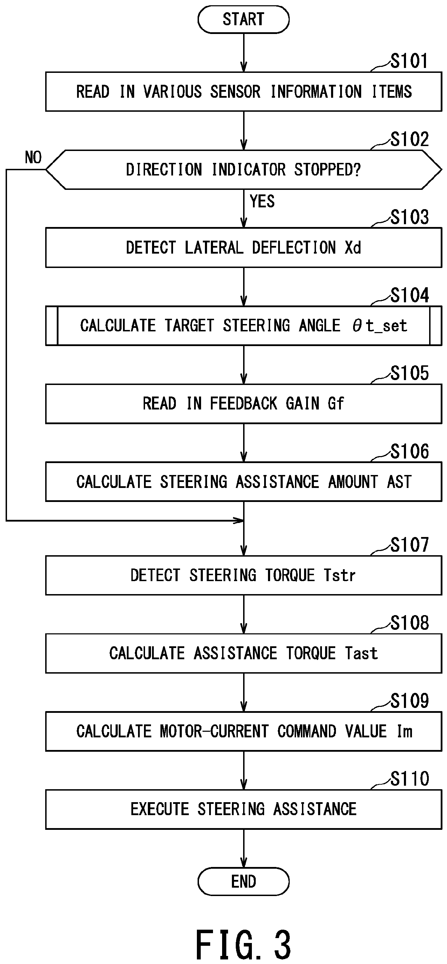

Fig. 3 is a flowchart illustrating the basic flow of the lane keeping control according to the present embodiment. The controller 11 repeatedly executes the control based on the routine shown in Fig. 3 at predetermined time intervals.

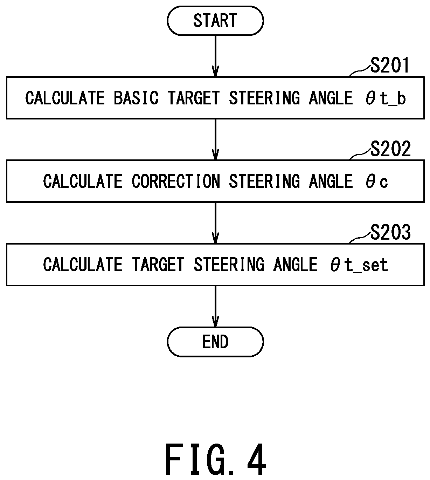

Fig. 4 is a flowchart illustrating details of target-steering-angle setting processing in the lane keeping control.

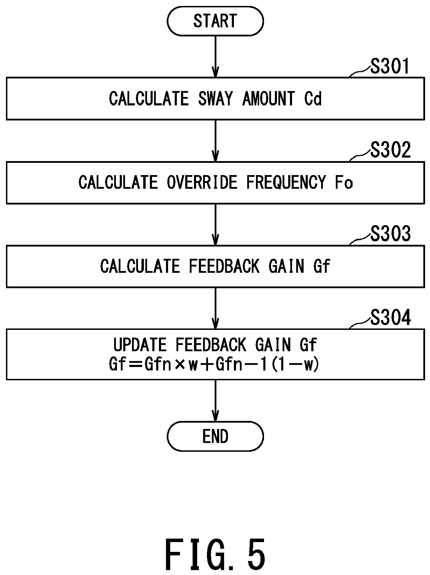

Fig. 5 is a flowchart illustrating details of feedback-gain setting processing in the lane keeping control.
In the flowchart of Fig. 3, in the step S101, the output information items from various sensors such as the external sensor 12 are read in.
In the step S102, it is determined whether the direction indicator 14 is stopped or not. If the direction indicator 14 is stopped, the processing proceeds to the step S103. Conversely, if the direction indicator 14 is activated and flashing (i.e., blinking), the processing proceeds to the step S107. If the direction indicator 14 is activated, it is determined that the driver intends to change the driving lane, and the execution of the processing from the steps 103 to S106 is temporarily stopped.
In the step S103, the lateral deflection Xd of the vehicle V is detected.
In the step S104, the target steering angle θt_set of the vehicle V is calculated. The target steering angle θt_set is calculated based on the procedure shown in the flowchart of Fig. 4.
In the flowchart of Fig. 4, in the step 201, the basic target steering angle θt_b is calculated. The basic target steering angle θt_b is the steering angle required for causing the vehicle V to run so as to track the lane center Cl, and is basically calculated on the basis of the curvature of the driving lane LNd. For example, a target position is set in front of the vehicle V, and a curve from the lane center Cl, at which the vehicle V is currently located, to this target position is virtually set. The target position can be set a predetermined distance ahead of the vehicle V and on the lane center Cl. Further, the curvature of this curve is calculated, and the steering angle in accordance with the calculated curvature is set as the basic target steering angle θt_b.
In the step S202, the correction amount of the basic target steering angle θt_b in accordance with the lateral deflection Xd, i.e., the correction steering angle θc is calculated.
In the step S203, the target steering angle θt_set is calculated by adding the correction steering angle θc to the basic target steering angle θt_b.
Returning to the flowchart of Fig. 3, in the step 105, the adjusted feedback gain Gf is read in. The feedback gain Gf is adjusted through the procedure shown in the flowchart of Fig. 5.
In the flowchart of Fig. 5, in the step 301, the sway amount Cd of the vehicle V is calculated.
In the step S302, the override frequency Fo of the driver is calculated.
In the step S303, the feedback gain Gf is calculated based on the sway amount Cd and the override frequency Fo by referring to the map shown in Fig. 6.
In the step S304, the feedback gain Gf is updated. This update is performed by Expression 1 below to reflect a weighting coefficient w ($0 < w < 1$) of the feedback gain $Gf_n$ newly calculated by the processing of the step 303 with respect to the current feedback gain $Gf_{n-1}$, for example.

$$Gf = Gf_n \times w + Gf_{n-1} \times (1-w) \qquad \text{Expression 1}$$

Returning to the flowchart of Fig. 3, in the step 106, the steering assistance amount AST is calculated. The steering assistance amount AST is calculated by calculating the difference $\Delta\theta$ between the target steering angle θt_set and the current steering angle θ and then multiplying this difference $\Delta\theta$ by the updated feedback gain Gf.

$$AST = (\theta t\_set - \theta) \times Gf \qquad \text{Expression 2}$$

In the step S107, the driver added torque Tstr is detected.
In the step S108, the assistance torque Tast is calculated.
In the step S109, the motor-current command value Im is calculated by adding the assistance torque Tast to the steering assistance amount AST and converting the resultantly acquired total torque Tttl into a command value of an electric current.
In the step S110, the motor-current command value Im is inputted to the controller of the electric motor and thereby steering is performed.

(Advantages and Effects)

The advantages and effects to be obtained by the present embodiment will be described below.

In the present embodiment, when the vehicle V sways while traveling on the driving lane LNd, this sway is detected and the steering assistance amount AST for suppressing this sway is set. Further, steering is performed by using the total torque Tttl of this steering assistance amount AST and the assistance torque Tast corresponding to the driver added torque Tstr so as to suppress the sway of the vehicle V and prompt the vehicle V to keep running on the driving lane LNd.

The configuration of the present embodiment detects the driver's intervention degree Qi in steering and adjusts the steering assistance amount AST depending on the detected driver's intervention degree Qi. The steering assistance amount AST is adjusted by adjusting the feedback gain Gf to be used for calculating the steering assistance amount AST. In other words, in the present embodiment, the feedback gain Gf is a variable factor for achieving a steering feeling that matches the driver.

Specifically, the feedback gain Gf is differentiated between drivers who have a large intervention degree Qi in steering and prefer to drive by prioritizing his/her own operation and drivers who have a small steering intervention degree Qi and prefer to rely on the control system during driving.

Such setting of the feedback gain Gf in the present embodiment adjusts the steering assistance amount AST to an appropriate value corresponding to the driver's intervention degree Qi in steering, and consequently, a steering feeling in accordance with the driver's preferences can be achieved by performing steering with the steering assistance amount AST in which the driver's intervention degree Qi is reflected.

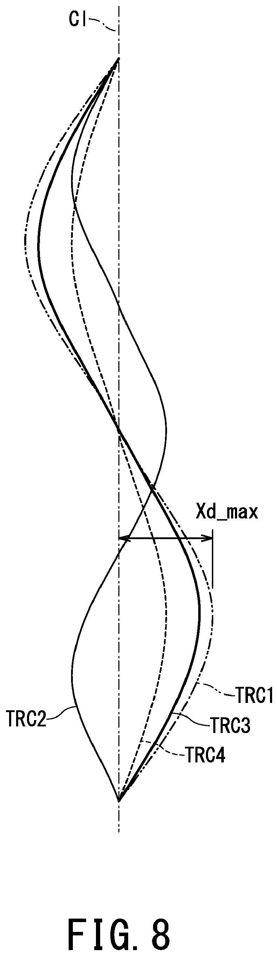

Fig. 8 is a schematic diagram illustrating a trajectory of the vehicle V depending on the driver's intervention degree Qi in steering.

In Fig. 8, the trajectory of the vehicle V without any driver's intervention is indicated by the two-dot chain-line curve TRC1, the trajectory of the vehicle V in the case of a driver with a large intervention degree Qi is indicated by a thin solid line TRC2, and the trajectory of the vehicle V in the case of a driver with a small intervention degree Qi is indicated by the thick solid line TRC3. Further, the dashed line TRC4 indicates the trajectory of the vehicle V when the intervention degree Qi of the driver is intermediate between the large case and the small case.

A driver who strongly intervenes in steering tends to intervene before sway of the vehicle V becomes larger (i.e., while sway is being small), and tends to intervene frequently in response to the sway. Thus, in the trajectory TRC2 in the case of the driver with a large intervention degree Qi, it is predicted that the width of sway (i.e., the maximum value Xd_max of the lateral deflection Xd) becomes smaller and the cycle of sway becomes shorter.

Contrastively, a driver with a weak intention to intervene in steering tends to intervene after sway of the vehicle V becomes large, and tends to intervene in steering in response to sway only occasionally. Thus, it is predicted that the trajectory TRC3 in the case of the driver with a small intervention degree Qi is not significantly different in both width and period of sway from the trajectory TRC1 in the case of no driver's intervention. Fig. 8 shows the trajectory TRC3 when the width of sway decreases to some extent due to the small driver's intervention degree Qi despite no significant difference in the period of sway.

In the present embodiment, the sway amount Cd (i.e., the tendency of sway when the driver intervenes by applying additional steering torque) is detected as the driver's intervention degree Qi. Accordingly, the appropriate steering assistance amount AST is individually set for each of the driver who intervenes in steering while the sway is being small and the driver who intervenes in steering after the sway becomes large, and consequently, a steering feeling in accordance with the driver's preferences can be achieved. The former type of driver has a large intervention degree Qi and tends to suppress sway itself, whereas the latter type of driver has a small intervention degree Qi and tends to tolerate sway to some extent.

Specifically, when the steering assistance amount AST is increased more as the sway amount Cd is larger, an appropriate steering assistance amount AST can be set for drivers who prefer to rely on the control system during driving. Conversely, when the steering assistance amount AST is decreased more as the sway amount Cd is smaller, an appropriate steering assistance amount AST can be set for drivers who prefer to drive by prioritizing their own operation.

Here, the sway amount Cd can be appropriately and easily detected based on the lateral deflection Xd in the span from the time when the vehicle V deviates leftward or rightward from the lane center Cl until the time when the vehicle V returns to the lane center Cl through turning the steering wheel in reverse. Additionally, the sway amount Cd can be readily detected by adopting the maximum value Xd_max of the lateral deflection Xd. Furthermore, without being unnecessarily influenced by uncertain factors such as temporary fluctuations in mood of the driver, the driver's preferences can be stably evaluated by using the average value (such as a moving average value) of the maximum deflection value Xd_max per predetermined period or predetermined travel distance.

Moreover, the frequency of the driver's intervention by applying additional steering torque, i.e., the override frequency Fo is detected as the driver's intervention degree Qi. Accordingly, an appropriate steering assistance amount Qi can be individually set for each of the driver who has a large intervention degree Qi and frequently applies steering torque and the drivers who has a small intervention degree Qi and does not frequently apply steering torque. As a result, a steering feeling in accordance with the driver's preferences can be achieved.

Specifically, since the steering assistance amount AST is increased more as the override frequency Fo is lower, an appropriate steering assistance amount AST can be set for drivers who prefer to rely on the control system during driving. Furthermore, since the steering assistance amount AST is decreased more as the override frequency Fo is higher, an appropriate steering assistance amount AST can be set for drivers who prefer to drive by prioritizing their own operation.

The override frequency Fo can be appropriately and easily detected based on the number of steering interventions Ni per predetermined period of time or predetermined travel distance. Further, without being unnecessarily influenced by uncertain factors such as temporary fluctuations in mood of the driver, the driver's preferences can be stably evaluated by taking the average value (such as a moving average value) of the number of intervention times Ni.

In addition to the above-described effects, in the control algorithm of the present embodiment, the vehicular lateral deflection Xd is detected, and the steering assistance amount AST is set by multiplying the lateral deflection Xd or its equivalent state quantity by the feedback gain Gf such that the feedback gain Gf is adjusted depending on the driver's intervention degree Qi. Hence, the steering assistance amount AST can be readily adjusted without adding substantial changes to the basic control configuration related to setting of the steering assistance amount AST. In the present embodiment, the correction steering angle $\theta c$ is used as a state quantity corresponding to the lateral deflection Xd and the correction steering angle $\theta c$ is reflected in the setting of the target steering angle $\theta t\_set$ such that the state quantity corresponding to the lateral deflection Xd is effectively multiplied by the feedback gain Gf.

Further, in the map shown in Fig. 6, a plurality of curves Cd1, Cd2, and Cd3, each of which determines the feedback gain Gf for each sway amount Cd, are set in advance. When the first curve Cd1 for a large sway amount Cd and the second curve Cd2 for a small sway amount Cd are compared, the feedback gain Gf1 determined by the first curve Cd1 in the region A with a low override frequency Fo is set to a value larger than the feedback gain Gf2, which is determined by the second curve Cd2 in the region B with a high override frequency Fo. Moreover, the feedback gain Gf3 determined by the second curve Cd2 in the region A with a low override frequency Fo is set to a value larger than the feedback gain Gf4, which is determined by the first curve Cd1 in the region B with a high override frequency Fo. In other words, the feedback gain Gf is set to partially overlap among the plurality of curves Cd1, Cd2, and Cd3 defined for each sway amount Cd.

As a situation where the feedback gain Gf4 is set by the first curve Cd1 in the region B with a high override frequency Fo, it is conceivable that the sway amount Cd is large and the sway of the vehicle V is not suppressed despite frequent steering interventions actually performed by the driver.

In such a situation, it is conceivable that the driver steers the vehicle in the direction of increasing the sway contrary to the operation of the control system that performs auxiliary steering in the direction of suppressing the sway.

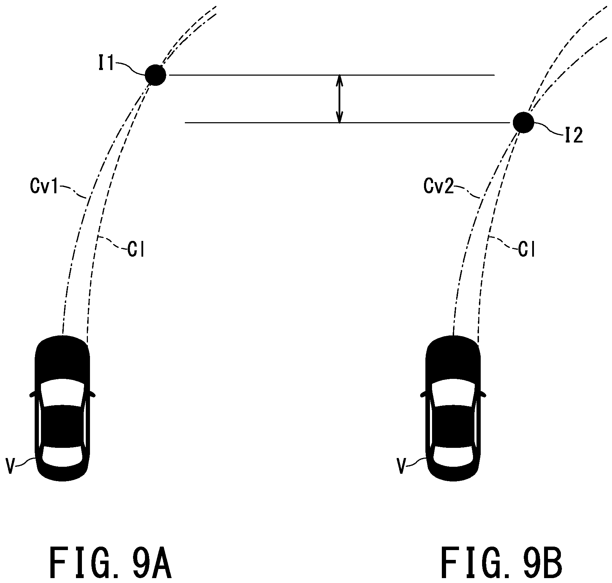

Fig. 9A and Fig. 9B are schematic diagrams illustrating a trajectory of the vehicle V at the time of passing through a curved road.

Fig. 9A illustrates a case where the vehicle V travels to track the lane center Cl, and Fig. 9B illustrates a case where the vehicle V passes inside the lane center Cl. In the case of tracking the lane center Cl, the vehicle center Cv1 intersects the lane center Cl at the forward position I1, and the subsequent sway amount Cd of the vehicle V decreases. In the case of passing inside the lane center Cl, the vehicle center Cv2 intersects the lane center Cl at the position I2 which is before the position I1, and the subsequent sway amount Cd of the vehicle V increases.

According to the present embodiment as shown in Fig. 6, the feedback gain Gf (Gf4) defined by the first curve Cd1 in the region B with a high override frequency Fo is set relatively small, specifically, the feedback gain Gf4 is set smaller than the feedback gain Gf3, which is determined by the second curve Cd2 in the region A with a low override frequency Fo. Consequently, as in the case shown in Fig 9B, when the sway amount Cd rather increases by the driver selecting his/her preferred driving route than by tracking the lane center Cl, the control system can avoid a situation where the control system excessively interferes with the steering performed by the driver.

In the above description, the sway amount Cd and the override frequency Fo of the vehicle V are used as the driver's intervention degree Qi in steering. The driver's intervention degree Qi is not limited to this aspect, and can be evaluated by using another index. Other indexes for the intervention degree Qi include the steering torque actually added by the driver at the time of intervening in steering (actual driver added torque). Using the actually added torque by the driver for the index enables determination of the driver's tendency, i.e., enables appropriate distinction between a driver who steers with a large driver added torque at the time of sway (has a large intervention degree Qi) and the opposite type of driver who has a small intervention degree Qi, and consequently, an appropriate steering assistance amount AST for achieving a steering feeling in accordance with the individual driver can be set, for example.

Specifically, when the steering assistance amount AST is increased more as the driver added torque Tstr is smaller, an appropriate steering assistance amount AST can be set for drivers who prefer to rely on the control system during driving. Conversely, when the steering assistance amount AST is decreased more as the driver added torque Tstr is larger, an appropriate steering assistance amount AST can be set for drivers who prefer to drive by prioritizing their own operation. The steering assistance amount AST can be adjusted by adjusting the feedback gain Gf in a manner like the above-described aspect.

Although the driver's intervention degree Qi in steering is continuously monitored and reflected in setting of the steering assistance amount AST in the above description, the driving support apparatus 1 can be configured such that the driver can select and switch whether adjustment of the steering assistance amount AST in accordance with the driver's intervention degree Qi is performed or not.

Specifically, the driving support apparatus 1 can be configured to switch the operation mode depending on the driver's selection, between a setting operation mode capable of more directly reflecting the driver's preferences by setting a predetermined feedback gain and an adjustment operation mode, in which the driver's intervention degree Qi in steering is detected and also the feedback gain Gf and the steering assistance amount AST are optimized depending on the detected intervention degree Qi.

In the setting operation mode, the first mode, the second mode, and the third mode can be further selected, for example.

The first mode may be configured as a mode (a1) in which a relatively large first gain (fixed value) is set as the feedback gain Gf or may be configured as another mode (a2) in which the feedback gain Gf is switched to a relatively large gain and the update speed for increasing the feedback gain Gf is increased more as the intervention degree Qi is smaller.

The second mode may be configured as a mode (b1) in which a second gain (fixed value) smaller than in the first mode is set as the feedback gain Gf or may be configured as another mode (b2) in which the feedback gain Gf is switched to a relatively small gain and the update speed for decreasing the feedback gain Gf is increased more as the intervention degree Qi is larger. In the first and second modes, the update speed of the feedback gain Gf can be adjusted by adjusting the weighting coefficient w.

The third mode is configured as a mode (c) in which a predetermined feedback gain Gf is set in advance. The feedback gain Gf to be set by the third mode is a default value, and changing this default value is prohibited.

Since the operation mode can be switched between the first to third modes by the driver's selection in this manner, the driver himself/herself can directly select the feedback gain Gf providing the desired steering feeling without waiting for completion of automatic adjustment of the feedback gain Gf to be adjusted to match the driver's preferences. Drivers who do not like the change in the steering assistance amount AST can achieve their own preferences as a standard steering feeling by selecting the third mode.

Furthermore, in addition to the first mode and the second mode, an intermediate mode selectable by the driver may also be set. For example, the first gain (fixed value) in the first mode is set to a value around the feedback gain Gf1 shown in Fig. 6, and the second gain (fixed value) in the second mode is set to a value around the feedback gain Gf2 shown in Fig. 6. The gain of the intermediate mode is set to a value between the first gain Gf1 and the second gain Gf2. The intermediate mode is not limited to an aspect of having only one gain. The gain of the intermediate mode may be switched between a plurality of gains including: a gain corresponding to the feedback gain Gf3 in the case of a small sway amount Cd and a low override frequency Fo or a gain close to this gain; and a gain corresponding to the feedback gain Gf4 in the case of a large sway amount Cd and a high override frequency Fo or a gain close to this gain.

While certain embodiments have been described, these embodiments have been presented by way of example only, and are not intended to limit the scope of the inventions. Indeed, the novel embodiments described herein may be embodied in a variety of other forms. Furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

**REFERENCE SIGNS LIST**

| | |
|---|---|
| 1 | vehicular driving support apparatus |
| 11 | controller |
| 12 | external sensor |
| 121 | front camera |
| 122 | front millimeter-wave radar |
| 13 | instrument panel |
| 131 | indicator light |
| 132 | warning light |
| 133 | alarm |
| 14 | direction indicator |

| 14 | warning light |
|---|---|
| 142 | alarm |
| 21 | steering torque sensor |
| 22 | steering angle sensor |
| 31 | steering actuator |
| Cl | lane center |
| Cv | vehicle center |
| R | road |
| Lc | centerline |
| Le | lane edge |
| LNd | driving lane |
| LNo | opposite lane |
| V | vehicle |

**Claims**

1. A vehicular driving support apparatus (1) comprising:

   a sway detection unit (11: 111) configured to detect sway of a vehicle (V) in a driving lane (LNd);
   a steering-assistance-amount setting unit (11: 114) configured to set steering assistance amount when the sway of the vehicle (V) is detected by the sway detection unit (11: 111), the steering assistance amount being assistance amount of steering torque for suppressing the sway;
   a driver's intervention detection unit (11: 112) configured to detect driver's intervention degree in steering;
   a steering-assistance-amount adjustment unit (11: 113) configured to adjust the steering assistance amount based on the intervention degree detected by the driver's intervention detection unit (11: 112); and
   a steering execution unit (11: 117) configured to steer the vehicle (V) by using total torque of driver added torque and the steering assistance amount adjusted by the steering-assistance-amount adjustment unit (11: 113), the driver added torque being steering torque added by the driver.

2. The vehicular driving support apparatus (1) according to claim 1, wherein the driver's intervention detection unit (11: 112) is configured to detect, as the intervention degree, sway amount that indicates tendency of the sway when the driver intervenes in steering by adding steering torque.

3. The vehicular driving support apparatus (1) according to claim 2, wherein the driver's intervention detection unit (11: 112) is configured to detect the sway amount based on lateral deflection of a position of the vehicle (V) with respect to a target position (Cl) in a driving lane (LNd) in a span from a time when the vehicle (V) deviates leftward or rightward from the target position (Cl) until a time when the vehicle (V) returns to the target position (Cl) through reverse turn of steering.

4. The vehicular driving support apparatus (1) according to claim 2 or claim 3, wherein the steering-assistance-amount adjustment unit (11: 113) is configured to increase the steering assistance amount more as the sway amount is larger.

5. The vehicular driving support apparatus (1) according to claim 1, wherein the driver's intervention detection unit (11: 112) is configured to detect, as the intervention degree, an override frequency that is a frequency of intervention in steering by the driver adding steering torque.

6. The vehicular driving support apparatus (1) according to claim 5, wherein the driver's intervention detection unit (11: 112) is configured to detect the override frequency based on number of times that steering intervention occurs per predetermined time.

7. The vehicular driving support apparatus (1) according to claim 5 or claim 6, wherein the steering-assistance-amount adjustment unit (11: 113) is configured to increase the steering assistance amount more as the override frequency is lower.

8. The vehicular driving support apparatus (1) according to claim 1, wherein the driver's intervention detection unit (11: 112) is configured to detect, as the intervention degree, the driver added torque when the intervention in steering occurs.

9. The vehicular driving support apparatus (1) according to claim 8, wherein the steering-assistance-amount adjustment unit (11: 113) is configured to increase the steering assistance amount more as the driver added torque is smaller.

10. The vehicular driving support apparatus (1) according to any one of claim 1 to claim 9, wherein:

the steering-assistance-amount setting unit (11: 114) is configured to

detect lateral deflection of a position of the vehicle (V) with respect to a target position (CI) in a driving lane (LNd) and
set the steering assistance amount by multiplying the lateral deflection or a state quantity equivalent to the lateral deflection by a predetermined gain; and

the steering-assistance-amount adjustment unit (11: 113) is configured to adjust the gain depending on the intervention degree.

11. The vehicular driving support apparatus (1) according to claim 10, wherein:

the driver's intervention detection unit (11: 112) is configured to detect sway amount and an override frequency as the intervention degree,

the sway amount indicating tendency of the sway when the driver intervenes in steering by adding steering torque, and
the override frequency being a frequency of driver's intervention in steering;

the steering-assistance-amount adjustment unit (11: 113) has a first curve (Cd1) that defines the gain in a case of a large sway amount in relation to the override frequency, and a second curve (Cd2) that defines the gain in a case of a small sway amount in relation to the override frequency; and
the gain defined by the first curve (Cd1) in a region where the override frequency is high is smaller than the gain defined by the second curve (Cd2) in a region where the override frequency is low.

12. The vehicular driving support apparatus (1) according to claim 10, wherein the steering-assistance-amount setting unit (11: 114) is configured to switch an operation mode depending on driver's selection among:

a first mode in which a relatively large first gain is set as the gain irrespective of the steering-assistance-amount adjustment unit (11: 113) or update speed for increasing the gain is increased more as the intervention degree is smaller;
a second mode in which a second gain smaller than in the first mode is set as the gain irrespective of the steering-assistance-amount adjustment unit (11: 113) or update speed for decreasing the gain is increased more as the intervention degree is larger; and
a third mode in which the gain is set in advance,
wherein the vehicular driving support apparatus (1) further comprises a steering-assistance-amount changing prohibition unit configured to prohibit the steering assistance amount from being changed by the steering-assistance-amount adjustment unit (11: 113) when the third mode is selected.

FIG. 1

FIG. 2

START

$\Large\searrow$S101

READ IN VARIOUS SENSOR INFORMATION ITEMS

$\Large\searrow$S102

NO — DIRECTION INDICATOR STOPPED?

YES

$\Large\searrow$S103

DETECT LATERAL DEFLECTION Xd

$\Large\searrow$S104

CALCULATE TARGET STEERING ANGLE $\theta$ t_set

$\Large\searrow$S105

READ IN FEEDBACK GAIN Gf

$\Large\searrow$S106

CALCULATE STEERING ASSISTANCE AMOUNT AST

$\Large\searrow$S107

DETECT STEERING TORQUE Tstr

$\Large\searrow$S108

CALCULATE ASSISTANCE TORQUE Tast

$\Large\searrow$S109

CALCULATE MOTOR-CURRENT COMMAND VALUE Im

$\Large\searrow$S110

EXECUTE STEERING ASSISTANCE

END

# FIG. 3

START

CALCULATE BASIC TARGET STEERING ANGLE $\theta t\_b$ — S201

CALCULATE CORRECTION STEERING ANGLE $\theta c$ — S202

CALCULATE TARGET STEERING ANGLE $\theta t\_set$ — S203

END

# FIG. 4

START

CALCULATE SWAY AMOUNT Cd — S301

CALCULATE OVERRIDE FREQUENCY Fo — S302

CALCULATE FEEDBACK GAIN Gf — S303

UPDATE FEEDBACK GAIN Gf
$Gf = Gfn \times w + Gfn-1(1-w)$ — S304

END

FIG. 5

FIG. 6

FIG. 7

CI

Xd_max

TRC2

TRC1
TRC3
TRC4

# FIG. 8

FIG. 9A          FIG. 9B

Europäisches
Patentamt

European
Patent Office

Office européen
des brevets

# EUROPEAN SEARCH REPORT

**Application Number**

EP 24 16 0036

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 102 548 832 A (TOYOTA MOTOR CO LTD; AISIN SEIKI) 4 July 2012 (2012-07-04) * claim 1 * | 1,5-10 | INV. B62D5/04 B60W30/10 B62D1/28 B62D15/02 |
| X | CN 100 387 476 C (NISSAN MOTOR [JP]) 14 May 2008 (2008-05-14) * claim 1 * | 1 | |
| X | CN 113 039 109 A (BAYERISCHE MOTOREN WERKE AG) 25 June 2021 (2021-06-25) * claim 1 * | 1 | |
| X | JP 2006 264623 A (MITSUBISHI FUSO TRUCK & BUS) 5 October 2006 (2006-10-05) * claim 1 * | 1 | |
| A | US 2009/024278 A1 (KONDO SATOSHI [JP] ET AL) 22 January 2009 (2009-01-22) * claim 1 * | 1,10 | |
| A | WO 2009/129890 A1 (VOLKSWAGEN AG [DE]; ROHLFS MICHAEL [DE]; CHLOSTA SVEN [DE]) 29 October 2009 (2009-10-29) * claim 1 * | 1,9 | **TECHNICAL FIELDS SEARCHED (IPC)** B62D B60W |
| A | US 8 626 392 B2 (KOJO TAKAHIRO [JP]; TOYOTA MOTOR CO LTD [JP]) 7 January 2014 (2014-01-07) * claim 1 * | 1,5 | |
| A | US 2017/137060 A1 (WANNER THOMAS [DE] ET AL) 18 May 2017 (2017-05-18) * claims 1-3 * | 1,5 | |
| A | US 2007/021889 A1 (TSUCHIYA YOSHIAKI [JP]) 25 January 2007 (2007-01-25) * claim 1 * | 1 | |

-/--

The present search report has been drawn up for all claims

| Place of search | Date of completion of the search | Examiner |
|---|---|---|
| The Hague | 22 September 2024 | Pemberton, Paul |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches
Patentamt

European
Patent Office

Office européen
des brevets

## EUROPEAN SEARCH REPORT

**Application Number**

EP 24 16 0036

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 9 592 850 B1 (KATAOKA MOTOAKI [JP] ET AL) 14 March 2017 (2017-03-14) * claim 1 * | 1 | |

TECHNICAL FIELDS SEARCHED (IPC)

The present search report has been drawn up for all claims

| Place of search | Date of completion of the search | Examiner |
|---|---|---|
| The Hague | 22 September 2024 | Pemberton, Paul |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 4 464 575 A1**

## ANNEX TO THE EUROPEAN SEARCH REPORT
## ON EUROPEAN PATENT APPLICATION NO.

EP 24 16 0036

This annex lists the patent family members relating to the patent documents cited in the above-mentioned European search report.
The members are as contained in the European Patent Office EDP file on
The European Patent Office is in no way liable for these particulars which are merely given for the purpose of information.

22-09-2024

| Patent document cited in search report | | | Publication date | Patent family member(s) | | | Publication date |
|---|---|---|---|---|---|---|---|
| CN | 102548832 | A | 04-07-2012 | CN | 102548832 | A | 04-07-2012 |
| | | | | DE | 112010003977 | T5 | 10-01-2013 |
| | | | | JP | 5036780 | B2 | 26-09-2012 |
| | | | | JP | 2011079410 | A | 21-04-2011 |
| | | | | US | 2012197496 | A1 | 02-08-2012 |
| | | | | WO | 2011042791 | A1 | 14-04-2011 |
| CN | 100387476 | C | 14-05-2008 | CN | 1616289 | A | 18-05-2005 |
| | | | | EP | 1531445 | A2 | 18-05-2005 |
| | | | | JP | 3982483 | B2 | 26-09-2007 |
| | | | | JP | 2005145198 | A | 09-06-2005 |
| | | | | US | 2005107931 | A1 | 19-05-2005 |
| CN | 113039109 | A | 25-06-2021 | CN | 113039109 | A | 25-06-2021 |
| | | | | DE | 102018126832 | A1 | 30-04-2020 |
| | | | | JP | 7459084 | B2 | 01-04-2024 |
| | | | | JP | 2022512803 | A | 07-02-2022 |
| | | | | KR | 20210050571 | A | 07-05-2021 |
| | | | | US | 2021354755 | A1 | 18-11-2021 |
| | | | | WO | 2020083964 | A1 | 30-04-2020 |
| JP | 2006264623 | A | 05-10-2006 | DE | 102006013045 | A1 | 19-10-2006 |
| | | | | JP | 2006264623 | A | 05-10-2006 |
| | | | | US | 2006217860 | A1 | 28-09-2006 |
| US | 2009024278 | A1 | 22-01-2009 | EP | 1862374 | A1 | 05-12-2007 |
| | | | | JP | 4684698 | B2 | 18-05-2011 |
| | | | | JP | 2006264405 | A | 05-10-2006 |
| | | | | US | 2009024278 | A1 | 22-01-2009 |
| | | | | WO | 2006101005 | A1 | 28-09-2006 |
| WO | 2009129890 | A1 | 29-10-2009 | DE | 102008057313 | A1 | 29-10-2009 |
| | | | | WO | 2009129890 | A1 | 29-10-2009 |
| US | 8626392 | B2 | 07-01-2014 | CN | 102947166 | A | 27-02-2013 |
| | | | | EP | 2586679 | A1 | 01-05-2013 |
| | | | | JP | 5293826 | B2 | 18-09-2013 |
| | | | | JP | WO2011161779 | A1 | 19-08-2013 |
| | | | | US | 2012123642 | A1 | 17-05-2012 |
| | | | | WO | 2011161779 | A1 | 29-12-2011 |
| US | 2017137060 | A1 | 18-05-2017 | CN | 106414217 | A | 15-02-2017 |
| | | | | DE | 102014107194 | A1 | 26-11-2015 |
| | | | | US | 2017137060 | A1 | 18-05-2017 |
| | | | | WO | 2015176863 | A2 | 26-11-2015 |

EPO FORM P0459

For more details about this annex : see Official Journal of the European Patent Office, No. 12/82

## ANNEX TO THE EUROPEAN SEARCH REPORT
## ON EUROPEAN PATENT APPLICATION NO.                    EP 24 16 0036

This annex lists the patent family members relating to the patent documents cited in the above-mentioned European search report.
The members are as contained in the European Patent Office EDP file on
The European Patent Office is in no way liable for these particulars which are merely given for the purpose of information.

22-09-2024

| Patent document cited in search report | Publication date | Patent family member(s) | | Publication date |
|---|---|---|---|---|
| US 2007021889 A1 | 25-01-2007 | CN | 1903633 A | 31-01-2007 |
| | | DE | 102006034198 A1 | 08-02-2007 |
| | | JP | 4492471 B2 | 30-06-2010 |
| | | JP | 2007030612 A | 08-02-2007 |
| | | US | 2007021889 A1 | 25-01-2007 |
| US 9592850 B1 | 14-03-2017 | NONE | | |

EPO FORM P0459

For more details about this annex : see Official Journal of the European Patent Office, No. 12/82

page 2 of 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013132923 A